# EUROPEAN PATENT APPLICATION

(11) **EP 4 645 248 A1**
(43) Date of publication of application: **05.11.2025**
(21) Application number: 24275051.1
(22) Date of filing: 02.05.2024
(51) Int. Cl.: G06V 10/143, G06V 10/58, G06V 20/10, G06V 20/60, G06V 20/70, G06V 10/80, G06V 20/17, G06V 10/82, G06V 10/764

(54) **FURTHER IMPROVEMENTS IN CLASSIFYING AN OBJECT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to a computer-implemented method of classifying an object from a real-world environment in which an entity operates, the computer-implemented method comprises: receiving an image from a camera mounted to the entity and a hyperspectral image from a hyperspectral camera mounted to the entity; obtaining a plurality of object classifications from a plurality of different classifier models, respectively; and generating an object classification by amalgamating the plurality of object classifications, wherein the plurality of different classifier models includes at least one classifier model configured to generate an object classification using the image and at least one classifier model configured to generate an object classification using the hyperspectral image

## Description

### FIELD OF THE INVENTION

The present invention relates to methods of classifying objects from real-world environments, and more specifically to methods which are computer-implemented.

### BACKGROUND

Object recognition using red, green, and blue, RGB, colour channel images are known for use in object detection using techniques such as edge detection. However, these techniques often fail when there is insufficient contrast between an object and a background, for example. This is particularly true in military settings where objects in a battlefield may be deliberately camouflaged with their background.

It is an aim of the subject-matter of the present disclosure to improve on the prior art.

### SUMMARY

Embodiments of the present invention are intended to address the above technical problems.

According to an aspect of the present invention, there is provided a computer-implemented method of classifying an object from a real-world environment in which an entity operates, the computer-implemented method comprising: receiving an image from a camera mounted to the entity and a hyperspectral image from a hyperspectral camera mounted to the entity; obtaining a plurality of object classifications from a plurality of different classifier models, respectively; and generating an object classification by amalgamating the plurality of object classifications, wherein the plurality of different classifier models includes at least one classifier model configured to generate an object classification using the image and at least one classifier model configured to generate an object classification using the hyperspectral image.

Advantageously, by amalgamating object classifications from models that classify objects from RGB and hyperspectral images, both colour and material composition can be taken into account. As a result, there will be fewer error detection errors.

In an embodiment, obtaining the plurality of object classifications from a plurality of different classifier models, comprises: inputting the image to a convolutional neural network model to generate a classification of an object in the image.

In an embodiment, obtaining the plurality of object classifications from a plurality of different classifier models comprises: inputting the image to a plurality of convolutional neural network models, each model trained to classify a different sub-object; compare locations of the sub-objects to expected locations of sub-objects of one or more known objects; and classifying the object based on the comparison.

In an embodiment, obtaining the plurality of object classifications from a plurality of different classifier models comprises: inputting the image to a trained image classifier to classify an object from the image; constructing a semantic materials map of the real-world environment by labelling each pixel of the hyperspectral image with a material based on its hyperspectral signature; identifying the classified object in the semantic materials map; and verifying the classified object as one of valid and invalid based on whether the material of the object in the semantic materials map matches an expected material for the classified object.

In an embodiment, obtaining the plurality of object classifications from a plurality of different classifier models comprises: constructing a hyperspectral curve for each pixel of the hyperspectral image; generating an interim image by converting the hyperspectral image to one of a single and a three-channel image based on its hyperspectral curve; and inputting the interim image to a trained image classifier to classify an object from the real-world environment.

In an embodiment, the trained image classifier into which the interim image is input is a convolutional neural network model.

In an embodiment, obtaining the plurality of object classifications from a plurality of different classifier models comprises: obtaining a hyperspectral signature for each pixel of the hyperspectral image; identifying a material associated with each pixel based on the hyperspectral signature; clustering the pixels of the hyperspectral image into sub-objects based on the identified materials; comparing the sub-objects to sub-objects of known objects; and identifying the object based on the comparison.

In an embodiment, generating an object classification by amalgamating the plurality of object classifications comprises: voting on the plurality of object classifications; and selecting the object classification with a majority vote.

In an embodiment, the computer-implemented method further comprises: applying a weight to each object classification of the plurality of object classifications prior to voting on the plurality of object classifications.

In an embodiment, applying a weight to each object classification of the plurality of object classifications comprises: applying a higher weight to an object classification with a higher prediction confidence than an object classification with a lower prediction confidence.

In an embodiment, applying a weight to each object classification of the plurality of object classifications comprises: applying a higher weight to an object classification of an animal than to an object classification of a non-animal.

According to an aspect of the present disclosure, there is provided a computer-implemented method of operating an autonomous system of an entity, the computer-implemented method comprising: classifying an object in a real-world environment in which the entity operates using the computer-implemented method of any preceding claim; generating an operation plan for the autonomous system based on the object classification; and operating the autonomous system according to the operation plan.

According to an aspect of the present disclosure, there is provided an entity comprising: a body; a hyperspectral camera mounted to the body; a camera mounted to the body; an autonomous system; at least one processor; and storage having instructions stored thereon that when executed by the at least one processor causes the at least one processor to perform the computer-implemented method of a preceding aspect or embodiment.

According to an aspect of the present disclosure, there is provided a transitory, or non-transitory, computer-readable medium having instructions stored thereon that when executed by the at least one processor, cause the at least one processor to perform the computer-implemented method of any preceding aspect or embodiment.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 shows a schematic block diagram of an entity, according to at least one embodiment;
Figure 2 is an image or a hyperspectral image captured by a respective camera or hyperspectral camera of the entity of Figure 1;
Figure 3 is a hyperspectral signature associated with a pixel of the hyperspectral image of Figure 2;
Figure 4 is a flattened hyperspectral image into a three-colour channel image based on the hyperspectral signatures from Figure 3;
Figure 5 is a block diagram of a neural network model, according to one or more embodiments;
Figure 6 is an image captured by a camera or a hyperspectral image captured by a hyperspectral camera of the entity, according to at least one embodiment;
Figure 7 is a semantic materials map constructed from the hyperspectral image, according to at least one embodiment;
Figure 8 shows a three-dimensional point cloud of a real-world environment in which the entity operates and showing an object included in the real-world environment, according to at least one embodiment;
Figure 9 shows a schematic diagram of first and second hyperspectral images captured from respective first and second hyperspectral cameras from the entity of Figure 1, according to at least one embodiment;
Figure 10 shows a similar schematic diagram to Figure 9 of first and second hyperspectral images captured from respective first and second hyperspectral cameras from the entity of Figure 1, according to at least one embodiment;
Figure 11 shows a schematic diagram of first and second hyperspectral cameras used for determining a three-dimensional position of an object relative thereto, according to at least one embodiment;
Figure 12 shows a flow chart summarising a computer-implemented method, according to at least one embodiment;
Figure 13 shows a flow chart summarising a computer-implemented method, according to at least one embodiment;
Figure 14 shows a flow chart summarising a computer-implemented method, according to at least one embodiment; and
Figure 15 shows a flow chart summarising a computer-implemented method, according to at least one embodiment.

### DETAILED DESCRIPTION

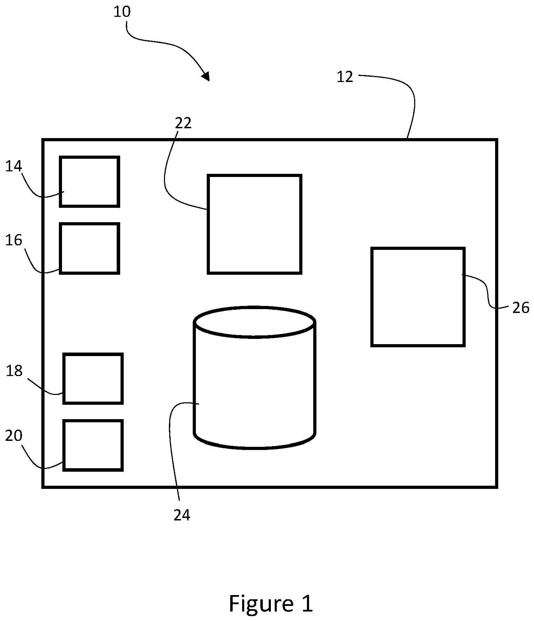

With reference to Figure 1, an entity 10 comprises a body 12, a first camera 14, a second camera 16, a first hyperspectral camera 18, a second hyperspectral camera 20, a processor 22, storage 24, and an autonomous system 26.

The entity may be a military vehicle. The military vehicle may be a tank or other armored vehicle, for example.

The first camera 14 and the second camera 16 are red, green, and blue, (RGB) cameras. A separation distance between the first and second cameras 14, 16, is known. The orientations of the first and second cameras 14, 16, is known. A separation distance between the first and second hyperspectral cameras 18, 20, is known. The orientations of the first and second hyperspectral cameras 18, 20, is known. The first and second cameras 14, 16, are each configured to capture an image, where the image is an RGB image or a grayscale image. In other words, the image is one of a three-channel image and a single channel image. The first and second hyperspectral cameras 18, 20 are each configured to capture a hyperspectral image.

The storage 24 may be non-transitory computer readable media. The storage 24 may have instructions stored thereon that when executed by the processor 22 cause the processor to perform any of the computer-implemented methods (which may be called methods herein) described herein. The computer-implemented methods include a metho of classifying an object from a real-world environment in which an entity operates.

The autonomous system 26 may be any system that may move autonomously based on the images or hyperspectral images. The autonomous system 26 may be an autonomous driving system when the entity is an autonomous vehicle. Alternatively, the autonomous system may be a robot arm or other robot system configured to move in the real-world environment.

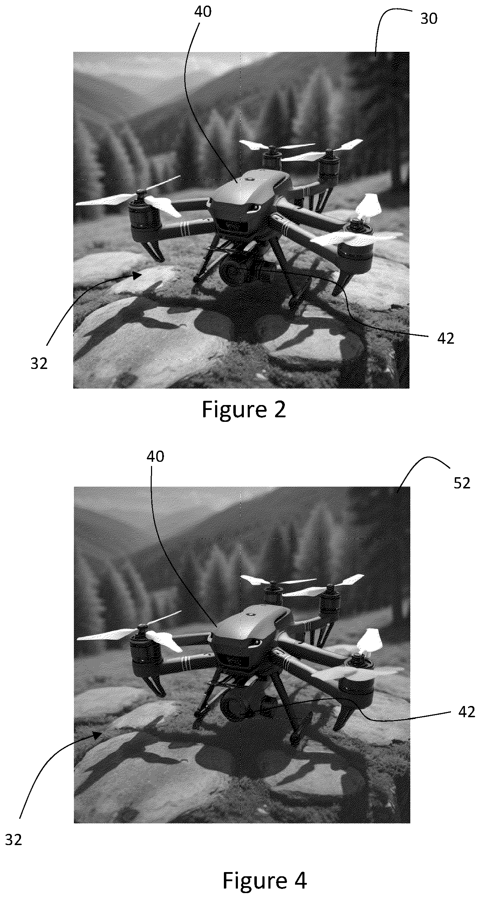

With reference to Figure 2, the method comprises receiving an image 31 from one of the cameras 14, 16, and a hyperspectral image 30 from one of the hyperspectral cameras. The images 30, 31 shows an object 32, namely a drone. The drone has a body 40 and sensors 42. sensors include lenses made from a glass material, and the body may be made out of a plastic or metal material.

The method also comprises obtaining a plurality of object classifications from a plurality of different classifier models, respectively. The plurality of different classifier models includes at least one classifier model configured to generate an object classification using the image and at least one classifier model configured to generate an object classification using the hyperspectral image.

Various classifier models including ones configured, or trained, to generate an object classification using an image, ones configured, or trained, to generate an object classification using a hyperspectral image, and ones configured, or trained, to generate an object classification using both an image and a hyperspectral image, are described below.

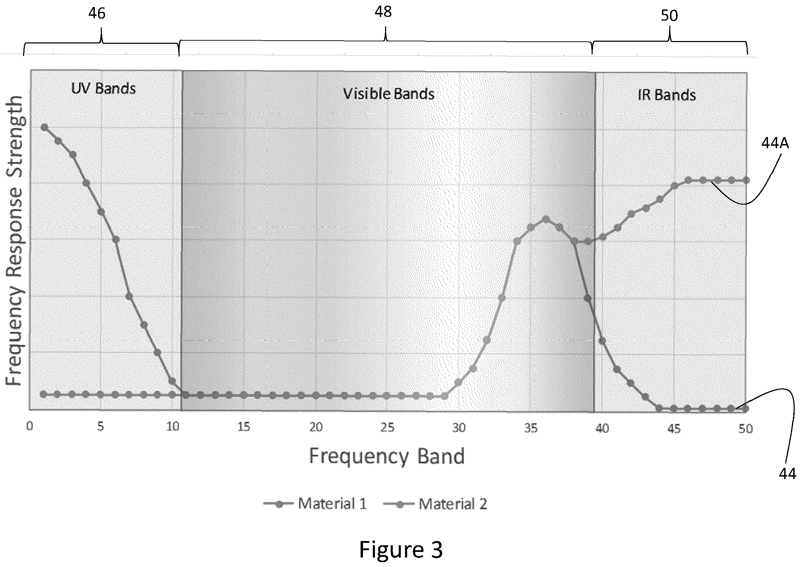

With reference to Figure 3, in one embodiment, for each pixel of the hyperspectral image 30, the method comprises constructing a hyperspectral curve, or hyperspectral signature, 44. Constructing the hyperspectral curve for each pixel of the hyperspectral image comprises dividing the hyperspectral curve into three frequency ranges. The three frequency ranges include an ultraviolet, UV, range 46, a visible light range 48, and an infrared, IR, range 50.

With reference to Figure 3, the hyperspectral curve 44 represents an object which has an orange colour in the visible light range. Therefore, the intensity of the curve peaks between red and yellow frequencies. The hyperspectral curve is a further peak in the UV range 46. A further hyperspectral curve 44A represents an object which has the same orange colour as the object of the hyperspectral curve 44. However, the object of the further hyperspectral curve is made from a different material and so does not have a peak in the UV range 46 but has a peak in the IR range 50 instead. For example, the material of the object of the hyperspectral curve 44 may be a plastic material, for example. The material of the object of the further hyperspectral curve 44A may be a glass material, for example.

With reference to Figure 4, the method comprises generating an interim image 52 by converting the hyperspectral image 30 into one of a single and a three-channel image based on its hyperspectral curve. The single channel image may be a grayscale image. The three-channel image is an RGB image, where a first channel is red, a second channel is green, and a third channel is blue. To convert the hyperspectral image 30 into the interim RGB image 52, the method comprises, for each pixel, identifying a dominant frequency in each frequency range. Dominant may be taken to mean a frequency having the highest intensity, also termed a response strength herein. So, the highest intensity frequency in each of the UV range (or band) 46, the visible range (or band) 48, and the IR range (or band) 50, is identified. Then, the method comprises setting a brightness level of the red channel of the pixel based on the intensity of the identified dominant frequency in the infrared range 50. Similarly, the method comprises setting a brightness level of a green channel of the pixel based on the intensity of the identified dominant frequency in the visible light range 48. Further, the method comprises setting a brightness level of the blue channel of the pixel based on the intensity of the identified dominant frequency in the UV range 46. It may be appreciated that in a typical RGB display there are usually three sub-pixels per pixel. The three sub-pixels include a red sub-pixel, a green sub-pixel, and a blue sub-pixel. Setting the brightness level of the respective channel may be achieved by setting the brightness level of the respective sub-pixel. The brightness level may be set using a plurality of brightness levels between 0, for no brightness, e.g. black, and 255 for full brightness, e.g. full red, green, or blue.

The method may instead comprise setting the brightness level of the respective channel based on a frequency of the identified dominant frequency in each frequency range. More specifically, the method may comprise: setting a brightness level of a first channel of the three channels of the pixel based on a frequency of the identified dominant frequency in the infrared range; setting a brightness level of a second channel of the three channels of the pixel based on a frequency of the identified dominant frequency in the visible range; and setting a brightness level of a third channel of the three channels of the pixels based on a frequency of the identified dominant frequency in the ultraviolet range. The dominant frequency is identified in the same way as above. The dominant frequency is used to set the brightness level by setting the brightness level between 0 and 255 of the respective sub-pixel.

The method may instead comprise setting the brightness level of the respective channel based on a frequency of the identified dominant frequency and an intensity of the dominant frequency in the each frequency range. More specifically, the method may comprise: setting a brightness level of a first channel of the three channels of the pixel based on a frequency of the identified dominant frequency and an intensity of the dominant frequency in the infrared range; setting a brightness level of a second channel of the three channels of the pixel based on a frequency of the identified dominant frequency and an intensity of the dominant frequency in the visible range; and setting a brightness level of a third channel of the three channels of the pixels based on a frequency of the identified dominant frequency and an intensity of the dominant frequency in the ultraviolet range. The dominant frequency is identified in the same way as above. The dominant frequency and its intensity are used to set the brightness level by setting the brightness level between 0 and 255 of the respective sub-pixel.

The interim image may be a single channel image, e.g. a grayscale image. The step of generating the interim image by converting the hyperspectral image to the single channel image based on its hyperspectral curve comprises: identifying a dominant frequency across the hyperspectral curve; and setting a brightness level of the pixel based on a frequency of the identified dominant frequency. The dominant frequency is determined in the same way as above. However, in this embodiment, the dominant frequency is identified for the entire curve 44 rather than for each frequency range. The brightness level may also be set based on the intensity of the identified dominant frequency.

To set the brightness level, the brightness level is normalized between 0 and 1. 0 is used for a dominant frequency corresponding to a highest ultraviolet frequency. 1 is used for a dominant frequency corresponding to a lowest IR frequency. The brightness level may be between 0 for black and 1 for white. This may correspond to the conventional pixel brightness levels of between 0 and 255, respectively.

The above description describes identifying the dominant frequency as the one with the highest intensity. This may be obtained in various ways. For example, a rules-based algorithm stored in the storage may be used to identify the frequency with the highest intensity. Alternatively, the hyperspectral curve 44 (Figure 3) may be input to a trained classifier. The classifier may be trained using training data including hyperspectral curves as inputs and corresponding labels of classifications as outputs. The labels of classifications may describe the dominant frequency and its intensity in one or more range, or across the entire curve. Training may use backpropagation and an optimization algorithm such as gradient descent, or the like. The trained classifier includes at least one convolutional neural network.

Once the interim image 30 has been generated, the method comprises classifying an object in the interim image. This can be achieved using a trained image classifier. The trained image classifier may be a neural network, and preferably a convolutional neural network.

The method of training the image classifier may be summarized as comprising: receiving training data; inputting the interim image to a trained image classifier to predict a classification an object in the interim image; and adjusting weights of the image classifier to reduce an error between the predicted classification and the expected classification. The weights may be adjusted using conventional training algorithms such as backpropagation and an optimization algorithm such as gradient descent.

The training data may be generated using a different method.

The method of generating the training data to train the image classifier may be summarized as comprising: receiving a hyperspectral image of the real-world environment from a hyperspectral camera mounted to the entity; constructing a hyperspectral curve for each pixel of the hyperspectral image; generating an interim image by converting the hyperspectral image to one of a single and a three-channel image based on its hyperspectral curve; and pairing the interim image with at least one label of an object in the interim image. The pairing may be done automatically using a machine learning algorithm.

The classifications may include multiple classes. For example, the classifications may be able to classify humans, animals, vehicles, etc. To achieve this a softmax layer, or similar, may be used in the trained classifier. The softmax layer provides a probability distribution such that each possible object has a probability of being true. The classification with the highest probability, and optionally, above a threshold probability, may be taken to be the correct classification.

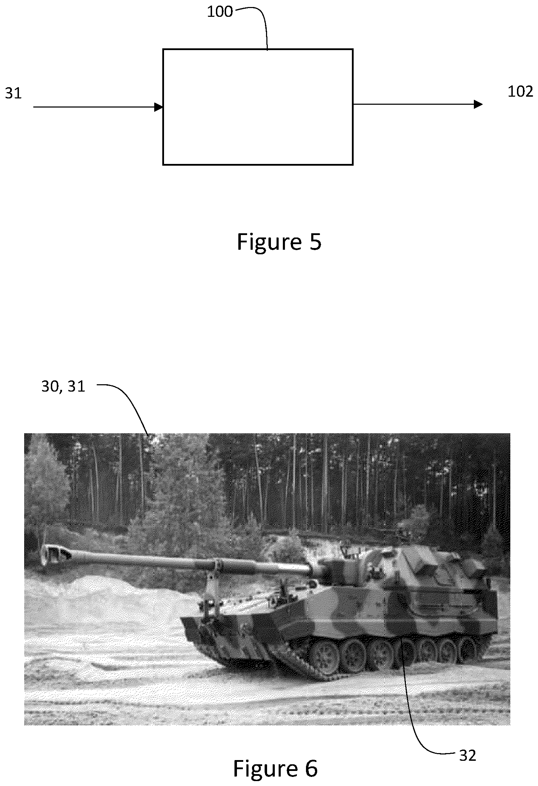

With reference to Figure 5, in another embodiment, obtaining the plurality of object classifications from a plurality of different classifier models comprises inputting the image 31 to a convolutional neural network model 100 to generate a classification 32 of an object in the image. The convolutional network may be trained using training images similar to image 31, and labels labelling one or more objects in each training image. The convolutional neural network may include a softmax layer to train the network to classify multiple objects. Weights of the neural network may be trained using back propagation and optimised using an optimisation algorithm such as gradient descent.

With reference to Figure 6, in another embodiment, one of the first or second cameras 14, 16, may capture an image 30. The image may be an RGB image. Similarly, the image may be a hyperspectral image 31, where the image has been captured by one of the first or second hyperspectral cameras 18, 20. The image 30 or hyperspectral image 31 captures a real-world environment, and an object 32 operating in the real-world environment. The object 32 may be a military object, and may be an armored vehicle such as a tank.

Obtaining the plurality of object classifications from a plurality of different classifier models comprises receiving the image 30 of the real-world environment from a camera mounted to the entity, and a hyperspectral image 31 of the real-world environment from a hyperspectral camera mounted to the entity.

The method also comprises inputting the image 30 to a trained image classifier to classify an object from the image. The trained image classifier is a machine learning model, which may be a convolutional neural network. The trained image classifier may be trained using input images and corresponding classifications of objects within the images. The classifier may be trained using backpropagation and an optimisation algorithm such as gradient descent. The trained image classifier may be the classifier 100 from Figure 5.

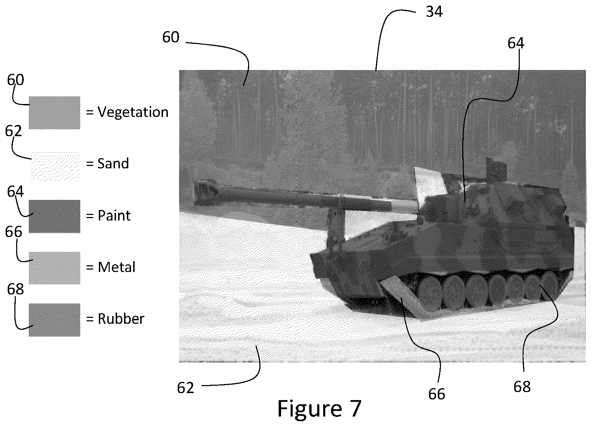

With reference to Figure 7, the method also comprises constructing a semantic materials map 34 of the real-world environment by labelling each pixel of the hyperspectral image with a material based on its hyperspectral signature. In other words, the method of constructing the semantic materials map may comprise assigning a label to each pixel based on its hyperspectral signature describing a material of the pixel.

The label may be assigned by inputting the hyperspectral signature of each pixel to a labelling model and obtaining a semantic label associated with the respective pixels from the semantic labelling model. The labelling model may be a machine learning model. The machine learning model may comprise a neural network trained, using a plurality of hyperspectral signatures and respective semantic labels, to label semantically the pixel based on its hyperspectral signature. The machine learning model may be trained using backpropagation and an optimisation algorithm such as gradient descent.

The material labels may include vegetation 60, sand, 62, paint 64, metal 66, rubber 68, etc. In the example of the tank, the vegetation 60 and sand 62 may form the background. The paint 64 may be provided on a body of the tank. The paint may provide a camouflaged effect to the body. The tracks may be identified as metallic 66, and the wheels within the tracks may be labelled as rubber 68.

Constructing the semantic materials map may also comprise clustering the pixels of the hyperspectral image into objects based on the associated assigned labels. clustering the pixels of the hyperspectral image into objects based on the associated assigned labels comprises inputting the semantic label for each pixel into a machine learning clustering model. The machine learning clustering model may be an unsupervised clustering model. The clustering model may be a k-means clustering algorithm.

The method also comprises identifying the classified object 32 in the semantic materials map 34. This may involve positionally matching the clustered object from the hyperspectral image 31 (i.e. the clustered object in the semantic materials map 34) with the classified object from the image 30 using positions and orientations of the respective hyperspectral camera 18, 20 and the camera 14, 16. For instance, a field of view of each camera is known from its properties, e.g. its lens and sensor size. The position of the object 32 in the image 30, or hyperspectral image 31, can therefore be used to determine a 2-dimensional position (e.g. height and width) relative to the camera. The positions of the cameras and their orientations can then be used to determine a relative position of the object from the image to the hyperspectral image. In this way, the positions of the clustered object in the semantic materials map and the object in the image 30 can be matched. This method works best when both of the cameras 14, 16, or hyperspectral cameras 18, 20, which are placed close together. Preferably, there may be two physical camera units. Each camera unit may include one of the cameras and one of the hyperspectral cameras which share a common lens, with light being diverted by a diversion means.

The method also comprises verifying the classified object as one of valid and invalid based on whether the material of the object in the semantic materials map matches an expected material for the classified object. This may involve retrieving a set of expected materials associated with the classified object from storage, verifying the classified object as valid if one or more of the materials of the object in the semantic materials map are present in the set of expected materials, and verifying the classified object as invalid if at least one of the materials from the set of expected materials is not present in the materials of the object from the semantic map. In other words, if none of the materials in the semantic materials map at a location of the classified object match the materials in the set of expected materials for that object, the object is verified as being invalid. Conversely, if one or more materials in the semantic materials map at a location of the classified object match the materials in the set of expected materials for that object, the object is verified as being valid.

Verifying the classified object as valid may be associated with a certainty score. In other words, when a certainty score is 100%, or 1 when normalised, the object classification can be taken to be valid. When the certainty score is less than 100%, or less than 1 when normalised, there is a degree of uncertainty about the valid verification. The method may comprise determining the certainty score based on a proportion of the sub-objects that are present in the set of expected materials. For example, if there are 5 sub-objects in an object being classified, and 3 of them are present in a set of expected materials, but 2 are not present in the set of expected materials, the certainty score may be 3/5, or 60%. In this way, the certainty score may be a ratio of sub-objects whose materials are present in the set of expected materials to sub-objects whose materials are not present in the set of expected materials. The certainty score may be provided with the valid classified object. For example, if the classification of the object is ultimately displayed to a user, the certainty score is provided too. Similarly, the certainty score may be sent to a downstream model to perform a task, e.g. trajectory generation. The downstream model may then use the certainty score to perform its task, e.g. trajectory generation.

To illustrate the above, object classification is associated with a list of constituent materials. For example, the tank is known to have paint, rubber, and metal as its constituent materials. Therefore, if materials at a location of the object in the semantic materials map include paint, rubber, and metal, the classification of the object being a tank is verified as valid. However, if only paint, or metal, is found at that location, the tank is verified as being valid with a low confidence score, e.g. of 33%. For example, if the semantic materials map shows vegetation, metal, and rubber, at the locations of the tank, it may be that the classifier has made an error and the camouflaged body may actually be vegetation of the background and so the metal and rubber do not relate to a tank.

With further reference to Figure 3, 6, and 7, obtaining the plurality of object classifications from a plurality of different classifier models comprises obtaining a hyperspectral signature 44, 44A for each pixel of the hyperspectral image 31.

The method also comprises identifying a material associated with each pixel based on the hyperspectral signature. This may be achieved by inputting the hyperspectral signature into a machine learning model trained to classify a material from hyperspectral signatures, and obtaining a material as the output from the machine learning model. The machine learning model may be a neural network model. The neural network model may be trained using a set of hyperspectral signatures and labels of materials associated with each hyperspectral signature. The neural network model may be a convolutional neural network model. The machine learning model may be trained using backpropagation and an optimisation algorithm such as gradient descent.

With reference to Figure 7, identifying the materials associated with each pixels may include a step of constructing a semantic materials map. This may be achieved by assigning a label to each pixel based on its hyperspectral signature describing a material of the pixel.

For the hyperspectral image 31 of Figure 6, the material labels may include vegetation 60, sand, 62, paint 64, metal 66, rubber 68, etc. In the example where the object 32 is a tank, the vegetation 60 and sand 62 may form the background. The paint 64 may be provided on a body of the tank. The paint may provide a camouflaged effect to the body. The tracks may be identified as metallic 66, and the wheels within the tracks may be labelled as rubber 68.

The method also comprises clustering the pixels of the hyperspectral image into sub-objects based on the identified materials. A sub-object may be a part of the object. For example, a sub-object of the tank may include a body, wheels, tracks, a gun, etc. In another example object of a car, the sub-objects may include, a body, windows, wheel rims, tyres, bumpers, etc. The sub-objects may each have a different material. For example, for the tank, the body may be associated with a paint material, tracks may be metallic, wheels may be rubber, the gun may be paint also, etc. For the car, the body may be associated with paint, windows may be glass, wheel rims maybe metallic or plastic, bumpers may be plastic or paint, tyres may be rubber, etc.

Clustering the pixels of the hyperspectral image into sub-objects based on the assigned materials may comprise inputting the material of each pixel to a machine learning clustering model. In this way, clustering may cluster sub-objects into contiguous groups where groups of pixels include the same materials. The machine learning clustering model may be an unsupervised clustering model. The unsupervised clustering model may be a k-means cluster model, for example.

The method also comprises comparing the sub-objects to sub-objects of known objects.

This may include identifying a primary sub-object from the clustered sub-objects, and identifying any remaining sub-objects from the clustered sub-objects as secondary sub-objects. Identifying the primary sub-object from the clustered sub-objects may be achieved in different ways. For example, this may be achieved by calculating a size of each sub-object from the clustered sub-objects, and identifying the primary sub-object as the sub-object having the largest size. The largest size may by determined as the sub-object with the largest number of pixels.

In another example, this may be achieved by determining a prediction probability when identifying the respective material of the sub-object, and selecting the primary sub-object as the sub-object having the material with the highest prediction probability. The prediction probability may be obtained from the neural network model. For example, a final layer of the neural network model may include a probability distribution over multiple classes of materials. In other words a probability that the hyperspectral signature is associated with each material class is determined and the material classification with the highest probability may be deemed to be the material of the pixel. The highest probability is unlikely to be 1, when normalised between 0 and 1, where 0 is no possibility and 1 is 100% probable. A SoftMax layer may be used to achieve this probability distribution. The probability associated with the classification of each pixel may be averaged over the sub-object to provide the prediction probability for the sub-object.

In another example, this may be achieved by identifying a frequency of occurrence of materials in the sub-objects of known objects, identifying one of the sub-objects having a material that corresponds to a lowest frequency of occurrence in the sub-objects of known materials, and selecting the identified sub-object having a material with the lowest frequency as the primary sub-object. For example, there may be 100 sub-objects of known objects that are rubber, 50 sub-objects of known objects that are plastic, and only 2 that are quartz. Therefore, if one of the sub-objects is quartz, this is selected as the primary sub-object. As a result, the search space for identifying the corresponding known object will be much smaller than if rubber was selected. In order to identify quickly the frequency of occurrence of the materials of the sub-objects of known materials, an index may be maintained which lists each material and a number of sub-objects that a made from that material.

Once the primary and secondary sub-objects are known, the material of the primary sub-object is compared with materials associated with sub-objects of the known objects. Any objects not having a sub-object with the same material as the primary sub-object may be disregarded. In this way, only known objects which have a material in common with the sub-objects are used for the comparison. This makes searching much easier and quicker as it narrows down the search space.

Comparing the sub-objects to sub-objects of known objects may include obtaining a feasible search zone for each sub-object of a known object. The feasible search zone includes a position, a size, and shape and a material. The position, the size and the shape of the sub-object may change depending on a position and orientation of the object relative to the entity. Therefore, each known object may have a set of feasible search zones for each position and orientation. The material should be consistent throughout the different positions and orientations.

The sub-objects may be compared to the feasible search zones. For instance, the sub-objects of the object are compared to the feasible search zones of each known object, or at least the known objects where the primary sub-object material matches. Then, the object having feasible search zones most closely matched by the respective sub-objects is identified. This may be achieved by determining a proportion of each feasible search zone that is occupied by a sub-object having the same material. For example, the proportion may be 0% to 100%, or may be normalised between 0 for no occupancy and 1 for full occupancy. This may also be considered as a degree of overlap of the sub-object compared to the feasible search zone. Then, the object having the most feasible search zones most occupied by a respective sub-object is selected as the object. This selection naturally indicates not only the known object but also the orientation and position of the known object.

Selecting the object having the most feasible search zones most occupied by the respective sub-object comprises determining, for each object, an average proportion of occupancy across feasible search zones. This may be achieved in different ways. For example, the prediction confidence may be determined when identifying the material of the sub-object. A weight may be assigned to each sub-object based on the prediction confidence. For example, a higher weight may be assigned to a sub-object having a material with a higher prediction confidence than sub-objects having a material with lower prediction confidence.

Then, a weighted average occupancy can be determined across the feasible search zones using the assigned weight of each sub-object. For example, if the prediction confidence is 1, or 100%, and all feasible search zones are fully overlapped with the correct material, the weighted average is 1, or 100%. Where the prediction confidence is 1, or 100%, and there are three feasible search zones (FSZ) for the known object, a first FSZ having an overlap of 50%, a second FSZ having an overlap of 100%, and a third FSZ having an overlap of 75%, the weighted average may be 75%. However, if the material of the sub-object associated with the first and second FSZs have prediction confidences of 50%, and the material of the sub-object associated with the third FSZ has a prediction confidence of 75%, and the overlap of the first FSZ is 50%, and the overlap for the second and third FSZs is 75%, then the weighted average overlap, or occupancy, is about 40%.

In other words, to determine an overall degree of occupancy, or overlap, of a known object, an average occupancy, or overlap, is calculated over all the FSZs for the known object. This calculation may be enhanced by applying the weight to the overlap of each FSZ.

In addition to above, if the material of the sub-object is known not to be associated with the known object, the sub-object may be assigned a zero weight, or even a negative weight. In this way, the average, or weighted average, will be significantly reduced.

The method may then comprise ranking the objects according to the average proportion of occupancy, and selecting the object with the highest rank.

In this way, the method comprises identifying the object based on the comparison. Once the object has been identified, a signal may be sent indicating the identified object.

In another embodiment, the previous embodiment may be modified so that obtaining the plurality of object classifications from a plurality of different classifier models comprises inputting the image to a plurality of convolutional neural network models, each model trained to classify a different sub-object; compare locations of the sub-objects to expected locations of sub-objects of one or more known objects; and classifying the object based on the comparison. This may be achieved in a similar way to the preceding embodiment by storing a plurality of objects, each having one or more sub-objects. The positions, sizes, and shapes of the sub-objects can then represent the respective objects are multiple different orientations, positions, and poses. In this way, there may be multiple instances of each object that are stored.

In this embodiment, the primary object may be decided in the same was as the preceding embodiment, and the locations, or positions, or sub-objects may be compared to the expected locations of sub-objects of the one or more known embodiments using FSZs, and optionally the weighted average FSZs. However, instead of comparing the materials to expected materials, the comparison will be to compare labels, or classifications of the sub-objects to those of the known objects. For example, instead of searching for rubber in a list of expected materials, the method may include searching for a tyre in a list of expected sub-objects.

To generate the known objects, a computer aided design, CAD, model of an object may be set up and images may be captured of the object at different orientations, positions, and poses. In this way, the sizes, shapes, and positions, of the sub-objects may be recorded.

The method also comprises generating an object classification by amalgamating the plurality of object classifications. This may be achieved by voting on the plurality of object classifications, and selecting the object classification with a majority vote. For example, all five embodiments described above are being used for the amalgamation, there may be 5 object classifications for an object 32 (assuming all methods detect the presence of an object to be classified). If two methods classify the object as a tank and three classify the object as a car, the majority vote is for a car classification. Therefore, the object classification of a car is selected since that has the majority vote.

A weight may be applied to each object classified from each method prior to voting on the plurality of object classifications. For example, higher weight may be applied to an object classification of an animal than an object classification of a non-animal. For instance, if only one model classifies an object as a human (animal), and the other four models classify the object as a plant, if the entity is a tank for example it may travel over the plant if the majority vote is based purely on a majority. However, if the majority is a weighted majority, the pant classifications can be given a low weight, e.g. 0.1, and the human may be given a higher weight, e.g. 0.8. The weights may be used to multiple by the vote. For example, four votes multiplied by 0.1 is 0.4, and one vote multiplied by 0.8 is 0.8. Therefore, the majority vote will be 0.4 for the plant and 0.8 for the human and the human will be classified as the object.

In another example, a higher weight may be applied to an object classification with a higher prediction confidence than an object classification with a lower prediction confidence. For example, the prediction confidence may be assigned to each classification from one of the embodiments above. For example, two methods may classify an object as a human and the other three may classify the object as a cardboard cut-out. The human classifications may have respective prediction accuracies of 90%, or 0.9, and 60%, or 0.6. The cardboard cut-out classifications may have respective prediction accuracies of 95%, or 0.95, 90%, or 0.9, and 50%, or 0.5. The weights may thus be 0.9 and 0.6 for the human classifications, and 0.95, 0.9, and 0.5, for the cardboard cut-out classifications. To object a weighted vote, the weights may be multiplied together. Weighted votes for the human will be 0.54 and weighted votes for the cardboard cut-out will be 0.43 (to 2 decimal places). Therefore, the overall classification of the object will be a human.

According to an embodiment, the method of classifying an object by amalgamating the plurality of object classifications may be used in another method of generating a labelled map of a real-world environment in which the entity operates.

The method comprises amalgamating a classification of an object in the real-world environment obtained using images from the first and second cameras, and a classification of the object in the real-world environment obtained using hyperspectral images from the first and second hyperspectral cameras, as described above.

The method also comprises amalgamating a three-dimensional point cloud of the real-world environment constructed using images from first and second cameras mounted to the entity, and a three-dimensional point cloud of the real-world environment constructed using hyperspectral images from first and second hyperspectral cameras mounted to the entity.

In order to amalgamate the three-dimensional point clouds, the method may first construct the three-dimensional point clouds.

With reference to Figure 6, according to at least one embodiment, the first and second hyperspectral cameras 18, 20 (Figure 1), may acquire first and second hyperspectral images, respectively, that may be used to construct a three-dimensional point cloud 30 of a real-world environment in which an entity operates. In this example, the real-world environment includes an object 32 that has been represented by points in the three-dimensional point cloud 30. The object in this example is an armored military vehicle, e.g. a tank. The three-dimensional point cloud is constructed with reference to Figures 3 to 6.

With reference to Figures 3 and 4, The method of constructing a three-dimensional point cloud of the real-world environment in which the entity operates comprises receiving a first hyperspectral image 34 from the first hyperspectral camera 18, and a second hyperspectral image 36 from the second hyperspectral camera 20.

Next, the method comprises determining positions of regions in the first hyperspectral images and positions of the regions in the second hyperspectral images. In other words, a region 38 from the real-world environment is detected in the first hyperspectral image 34 and the second hyperspectral image 36.

With reference to Figure 5, for each pixel of each hyperspectral image 18, 20, the method comprises constructing a hyperspectral curve, or hyperspectral signature, 44. Constructing the hyperspectral curve for each pixel of the hyperspectral image comprises dividing the hyperspectral curve into three frequency ranges. The three frequency ranges include an ultraviolet, UV, range 46, a visible light range 48, and an infrared, IR, range 50.

The hyperspectral curve 44 represents an object which has an orange colour in the visible light range. Therefore, the intensity of the curve peaks between red and yellow frequencies. The hyperspectral curve is a further peak in the UV range 46. A further hyperspectral curve 44A represents an object which has the same orange colour as the object of the hyperspectral curve 44. However, the object of the further hyperspectral curve is made from a different material and so does not have a peak in the UV range 46 but has a peak in the IR range 50 instead. For example, the material of the object of the hyperspectral curve 44 may be a plastic material, for example. The material of the object of the further hyperspectral curve 44A may be a glass material, for example.

In order to determine that the region 38 in each of the first and second hyperspectral images 34, 36, relate to the same region in the real-world environment, the method involves the following steps.

First, with reference to Figures 3 and 4, a one-to-one best match is found between hyperspectral signatures of pixels in the first hyperspectral image and pixels in the second hyperspectral image. Finding the one-to-one best match may be achieved in various ways.

For example, the one-to-one best matching pixels may be found by comparing the hyperspectral signature of each pixel of the first hyperspectral image with the hyperspectral signature of each pixel in the second hyperspectral image using a rules-based comparison algorithm. The rules-based algorithm may be an algorithm hard coded by a human programmer and is stored in the storage 24 (Figure 1). Each hyperspectral signature 44 (Figure 5) includes a plurality of frequency bands covering infrared frequencies, visible frequencies, and ultraviolet frequencies, as described with reference to Figure 5. Examples of how the rules-based algorithm compares the respective hyperspectral signatures include determining a characteristic feature of the respective hyperspectral signatures, and comparing those characteristic features. The characteristic features may include a mean intensity, a peak intensity, a peak intensity in each frequency range, a mean intensity in each frequency range, a dominant frequency at which the peak intensity occurs, a dominant frequency in each frequency range, etc.

Another way to find a one-to-one best pixel match is to apply each pixel from the respective first and second hyperspectral images to a neural network model trained to compare hyperspectral signatures of two or more pixels to determine best matches between the respective pixels of the first and second hyperspectral images. The neural network model be trained to use pairwise comparison to compare the respective signatures directly. In another embodiment, the neural network may be applied to each signature separately, and the classifications from each output may be compared. The neural network may be a convolutional neural network. The neural network may be trained using back propagation and an optimisation algorithm, e.g. gradient descent. The neural network may be trained using a plurality of hyperspectral signatures as inputs, each hyperspectral signature being labelled with a classification. The pairwise comparison example may using training data where a plurality of hyperspectral signatures are combined in different combinations with a label describing how similar the signatures are used as the output.

Another way to find a one-to-one best pixel match is to apply the pixels from the respective first and second hyperspectral images to an unsupervised machine learning model to determine best matches between the respective pixels of the first and second hyperspectral images, 34, 36. The unsupervised model may be a clustering model, e.g. k-means clustering.

Regardless as to the method used to determine the one-to-one best match described above, the method may also determine the one-to-one best match by applying one or more geometric rules to validate matched pixels based on one or more geometric constraints. The one or more geometric constraints may include chirality, maintaining direction relative to other matched pixels, or orientation relative to other matched pixels. In this way, a macro view of the pixel is taken with context used from other pixels than the pixels being compared.

It should be noted that comparing the pixels in respective images is performed on a one-to-one basis. In other words, each pixel in the first hyperspectral image 34 may be compared to every pixel in the second hyperspectral image 36.

Once the pixels have been matched to pixels of the other hyperspectral image, the pixels are identified as corresponding to the same region 54. The method also comprises determining respective positions of the matched pixels in each of the first and second hyperspectral images. For example, a first pixel 50 in the first hyperspectral image 34 that matches a first pixel 52 in the second hyperspectral image 36 may be assessed to ascertain their respective positions in their respective hyperspectral images 34, 36. In this way, the respective positions of the region 54 in each hyperspectral image 34, 36, can be determined.

It should be noted that each region 54 may be a face of an object, or part of an edge of an object. In this way, each object may be represented by multiple regions. The position of the region 54 can otherwise be called a position of a point.

With reference to Figure 6, once the positions of the region 54 in each hyperspectral image 34, 36, is known, the method comprises determining three-dimensional positions of each region 54 based on the respective positions of the regions in each of the first and second hyperspectral images 34, 36, a separation distance between the first and second hyperspectral cameras, 18, 20, and an orientation angle of each of the first and second hyperspectral cameras 18, 20.

This may be achieved by calculating the three-dimensional positions of the matched pixels from the first and second hyperspectral images 34, 36, using the positions of the matched pixels in the first hyperspectral image, 34 the positions of the matched pixels in the second hyperspectral image, 36, the separation distance between the first and second hyperspectral cameras, 18, 20, and the orientations of the first and second hyperspectral cameras 18, 20, using trigonometry. In this way, a distance between the region and the hyperspectral cameras 18, 20, can be determined. The distance is thus the depth of the region. In this way, comprises using the calculated three-dimensional positions of the matched pixels corresponding to the region for the three-dimensional position of the region.

In other embodiments, a different approach can be used where first the matched pixels are clustered from each of the first and second hyperspectral images 34, 36, into groups.

With reference to Figures 3 and 4, each region 54 can be identified as one of the groups. It should be noted that a region is different to an object. A region may be a group of contiguous pixels which share the same properties, e.g. all made of metal, and are bounded by one or more regions having different properties to the property of the region. An object may be one or more regions that has been classified as a known object. Then the method comprises determining positions of each region 54 in each of the first and second hyperspectral images 34, 36.

Identifying each region as one of the groups may be achieved in various ways.

For example, the method may comprise comparing a geometry of the respective groups in the first and second hyperspectral images using a rules-based comparison algorithm. The rules-based algorithm may be hard coded by a human programmer. The rules-based algorithm may compare geometry of the respective groups by determining a characteristic of the groups and comparing those characteristics. The characteristics may include shape, size, and orientation of the matched regions.

In another example, the method may comprise applying the groups, from each of the respective first and second hyperspectral images, to a neural network model trained to compare groups between hyperspectral images to determine a best matched group between the hyperspectral images. The neural network may be trained to compared groups directly, e.g. using pairwise comparison. Using pairwise comparison, all groups from one hyperspectral image may be compared with each group from the other hyperspectral image. Groups which are most similar will be determined as matched groups. Another way to perform this method is to apply each group being compared to the same neural network model separately. The neural network model may be trained to classify the model. The classifications may be associated with probabilities. Groups from each image having most similar probabilities for a classification, or different classifications, may be determined as being a match.

In other example, the method may comprise applying the groups, from each of the respective first and second hyperspectral image, to an unsupervised machine learning model to determine a best matched group between the hyperspectral images. The unsupervised model may be a clustering algorithm, e.g. k-means clustering.

Regardless as to the nature of determining the matched regions, the method may also comprise validating a group as the region when one or more geometric rules are satisfied, and disregarding a group as the region when the one or more geometric rules are not satisfied. The geometric rules may include chirality of the region, maintaining direction relative to other regions, or an orientation relative to other matched regions.

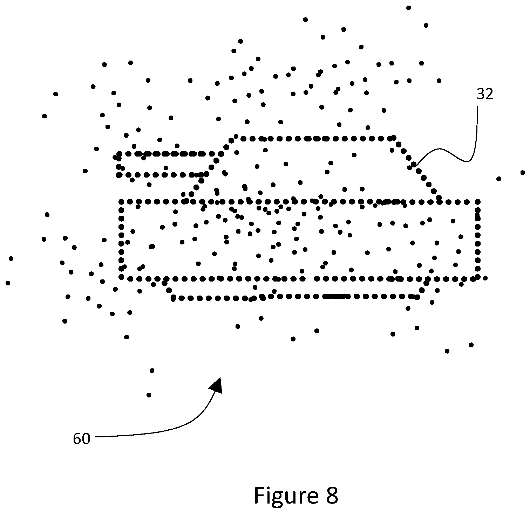

Once the three-dimensional positions of the regions has been determined, the method may use those positions to construct the three-dimensional point cloud 30 to include the regions at the respective determined three-dimensional positions, as shown in Figure 8. The three-dimensional positions of the regions are obtained as above. In other words, the positions of each pixel in the region make up a group of positions associated with the region. A position of a region may not be a single point, e.g. a centroid of an entire region. Instead, the positions of each pixel making up the region may form a group of positions associated with the region.

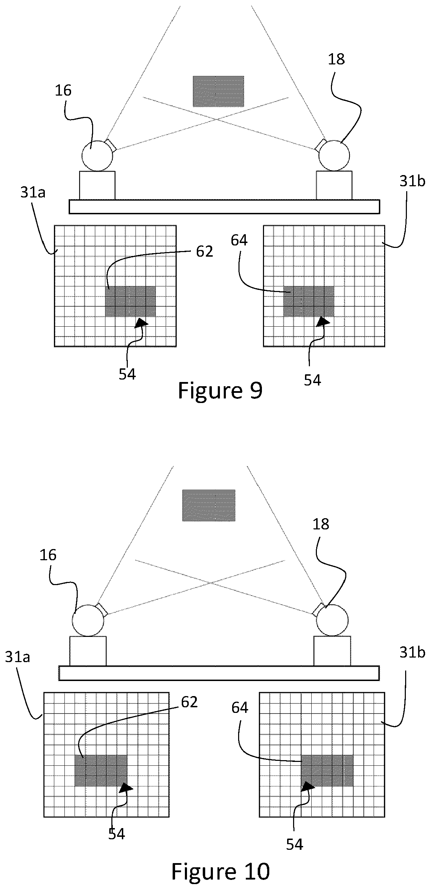

With reference to Figure 8, according to at least one embodiment, the first and second hyperspectral cameras 18, 20 (Figure 1), may acquire first and second hyperspectral images, respectively, that may be used to construct a three-dimensional point cloud 60 of a real-world environment in which an entity operates. In this example, the real-world environment includes an object 32 that has been represented by points in the three-dimensional point cloud 60. The object in this example is an armored military vehicle, e.g. a tank. The three-dimensional point cloud is constructed with reference to Figures 9 to 11.

With reference to Figures 3 and 4, The method of constructing a three-dimensional point cloud of the real-world environment in which the entity operates comprises receiving a first hyperspectral image 31a from the first hyperspectral camera 18, and a second hyperspectral image 31b from the second hyperspectral camera 20.

Next, the method comprises determining positions of regions in the first hyperspectral images and positions of the regions in the second hyperspectral images. In other words, a region 54 from the real-world environment is detected in the first hyperspectral image 31a and the second hyperspectral image 31b.

The hyperspectral signature 44, 44A, is obtained in the same manner as described above with reference to Figure 3.

In order to determine that the region 54 in each of the first and second hyperspectral images 31a, 31b, relate to the same region in the real-world environment, the method involves the following steps.

First, with reference to Figures 9 and 10, a one-to-one best match is found between hyperspectral signatures of pixels in the first hyperspectral image and pixels in the second hyperspectral image. Finding the one-to-one best match may be achieved in various ways.

For example, the one-to-one best matching pixels may be found by comparing the hyperspectral signature of each pixel of the first hyperspectral image with the hyperspectral signature of each pixel in the second hyperspectral image using a rules-based comparison algorithm. The rules-based algorithm may be an algorithm hard coded by a human programmer and is stored in the storage 24 (Figure 1). Each hyperspectral signature 44 (Figure 3) includes a plurality of frequency bands covering infrared frequencies, visible frequencies, and ultraviolet frequencies, as described with reference to Figure 3. Examples of how the rules-based algorithm compares the respective hyperspectral signatures include determining a characteristic feature of the respective hyperspectral signatures, and comparing those characteristic features. The characteristic features may include a mean intensity, a peak intensity, a peak intensity in each frequency range, a mean intensity in each frequency range, a dominant frequency at which the peak intensity occurs, a dominant frequency in each frequency range, etc.

Another way to find a one-to-one best pixel match is to apply each pixel from the respective first and second hyperspectral images to a neural network model trained to compare hyperspectral signatures of two or more pixels to determine best matches between the respective pixels of the first and second hyperspectral images. The neural network model be trained to use pairwise comparison to compare the respective signatures directly. In another embodiment, the neural network may be applied to each signature separately, and the classifications from each output may be compared. The neural network may be a convolutional neural network. The neural network may be trained using back propagation and an optimisation algorithm, e.g. gradient descent. The neural network may be trained using a plurality of hyperspectral signatures as inputs, each hyperspectral signature being labelled with a classification. The pairwise comparison example may using training data where a plurality of hyperspectral signatures are combined in different combinations with a label describing how similar the signatures are used as the output.

Another way to find a one-to-one best pixel match is to apply the pixels from the respective first and second hyperspectral images to an unsupervised machine learning model to determine best matches between the respective pixels of the first and second hyperspectral images, 31a, 31b. The unsupervised model may be a clustering model, e.g. k-means clustering.

Regardless as to the method used to determine the one-to-one best match described above, the method may also determine the one-to-one best match by applying one or more geometric rules to validate matched pixels based on one or more geometric constraints. The one or more geometric constraints may include chirality, maintaining direction relative to other matched pixels, or orientation relative to other matched pixels. In this way, a macro view of the pixel is taken with context used from other pixels than the pixels being compared.

It should be noted that comparing the pixels in respective images is performed on a one-to-one basis. In other words, each pixel in the first hyperspectral image 31a may be compared to every pixel in the second hyperspectral image 31b.

Once the pixels have been matched to pixels of the other hyperspectral image, the pixels are identified as corresponding to the same region 54. The method also comprises determining respective positions of the match pixels in each of the first and second hyperspectral images. For example, a first pixel 62 in the first hyperspectral image 31a that matches a first pixel 64 in the second hyperspectral image 31b may be assessed to ascertain their respective positions in their respective hyperspectral images 31a, 31b. In this way, the respective positions of the region 54 in each hyperspectral image 31a, 31b, can be determined.

It should be noted that each region 54 may be an edge of an object, or part of a face of an object. In this way, each object may be represented by multiple regions or edges. The position of the region 54 can otherwise be called a position of a point.

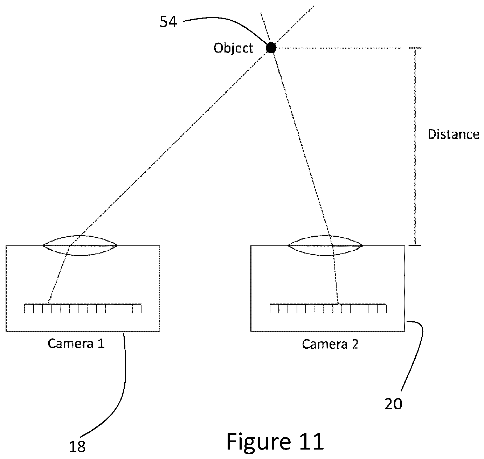

With reference to Figure 11, once the positions of the region 54 in each hyperspectral image 31a, 31b, is known, the method comprises determining a three-dimensional position of each region 54 based on the respective positions of the regions in each of the first and second hyperspectral images 31a, 31b, a separation distance between the first and second hyperspectral cameras, 18, 20, and an orientation angle of each of the first and second hyperspectral cameras 18, 20.

This may be achieved by calculating the three-dimensional positions of the matched pixels from the first and second hyperspectral images 31a, 31b, using the positions of the matched pixels in the first hyperspectral image, 31a the positions of the matched pixels in the second hyperspectral image, 31b, the separation distance between the first and second hyperspectral cameras, 18, 20, and the orientations of the first and second hyperspectral cameras 18, 20, using trigonometry. In this way, a distance between the region and the hyperspectral cameras 18, 20, can be determined. The distance is thus the depth of the region. In this way, comprises using the calculated three-dimensional positions of the matched pixels corresponding to the region for the three-dimensional position of the region.

In other embodiments, rather than determining positions of individual matched pixels, a different approach can be used where first the matched pixels are clustered from each of the first and second hyperspectral images 31a, 31b, into groups.

With reference to Figures 9 and 10, each region 54 can be identified as one of the groups. Then the method comprises determining a position of each region 54 in each of the first and second hyperspectral images 31a, 31b.

Identifying each region as one of the groups may be achieved in various ways.

For example, the method may comprise comparing a geometry of the respective groups in the first and second hyperspectral images using a rules-based comparison algorithm. The rules-based algorithm may be hard coded by a human programmer. The rules-based algorithm may compare geometry of the respective groups by determining a characteristic of the groups and comparing those characteristics. The characteristics may include shape, size, and orientation of the matched regions.

In another example, the method may comprise applying the groups, from each of the respective first and second hyperspectral images, to a neural network model trained to compare groups between hyperspectral images to determine a best matched group between the hyperspectral images. The neural network may be trained to compared groups directly, e.g. using pairwise comparison. Using pairwise comparison, all groups from one hyperspectral image may be compared with each group from the other hyperspectral image. Groups which are most similar will be determined as matched groups. Another way to perform this method is to apply each group being compared to the same neural network model separately. The neural network model may be trained to classify the model. The classifications may be associated with probabilities. Groups from each image having most similar probabilities for a classification, or different classifications, may be determined as being a match.

In other example, the method may comprise applying the groups, from each of the respective first and second hyperspectral image, to an unsupervised machine learning model to determine a best matched group between the hyperspectral images. The unsupervised model may be a clustering algorithm, e.g. k-means clustering.

Regardless as to the nature of determining the matched regions, the method may also comprise validating a group as the region when one or more geometric rules are satisfied, and disregarding a group as the region when the one or more geometric rules are not satisfied. The geometric rules may include chirality of the region, maintaining direction relative to other regions, or an orientation relative to other matched regions.

Once the three-dimensional positions of the regions have been determined, the method may use those positions to construct the three-dimensional point cloud 30 to include the regions at the respective determined three-dimensional positions, as shown in Figure 8.

The three-dimensional point cloud constructed using images 30, rather than hyperspectral images 31, is done in a similar way.

For example, the method may include determining positions of regions in the images from the respective first and second cameras, and constructing the three-dimensional point cloud to include the regions at the respective determined three-dimensional positions. Prior to constructing the three-dimensional point cloud, the method may comprise determining a three-dimensional position of each region based on the respective positions of the regions in the images, a separation distance between the first and second cameras, and an orientation angle of each of the first and second cameras. This is done in the same way as described above with the hyperspectral images.

A main difference of constructing the three-dimensional point cloud using images rather than hyperspectral images, is in determining boundaries of the regions. Instead of obtaining a hyperspectral signature and clustering contiguous groups of pixels, the method may comprise inputting first and second RGB images into a neural network classifier trained to detect edges. The edges may be points of the point cloud and may combine to form regions. For example, there may be multiple regions or features in any object, since objects typically have multiple edges. The same may be true of the regions from the regions from the hyperspectral images. The trained neural network classifier may be trained in a similar way as the various models described above using back propagation and an optimisation algorithm such as gradient descent, using training images and corresponding edges.

Amalgamating the three-dimensional point clouds may also comprise: calculating a distance between respective points of the three-dimensional point clouds, if the distance is less then a tolerance limit, merging the respective three-dimensional points clouds by taking an average position of each point of the respective point cloud, and if the distance is greater than or equal to the tolerance limit, selecting a point the is closest to the respective first and second cameras or the first and second hyperspectral cameras. The tolerance limit may be a percentage of a distance between the respective cameras or hyperspectral cameras and the point. The tolerance limit may be a percentage of the distance to the point. For example, the tolerance limit may be ±10% of the distance to the point.

Then, the method comprises identifying a point in the amalgamated three-dimensional point cloud that corresponds positionally with the amalgamated classified object, then generating a labelled map by labelling the identified point with the amalgamated classification.

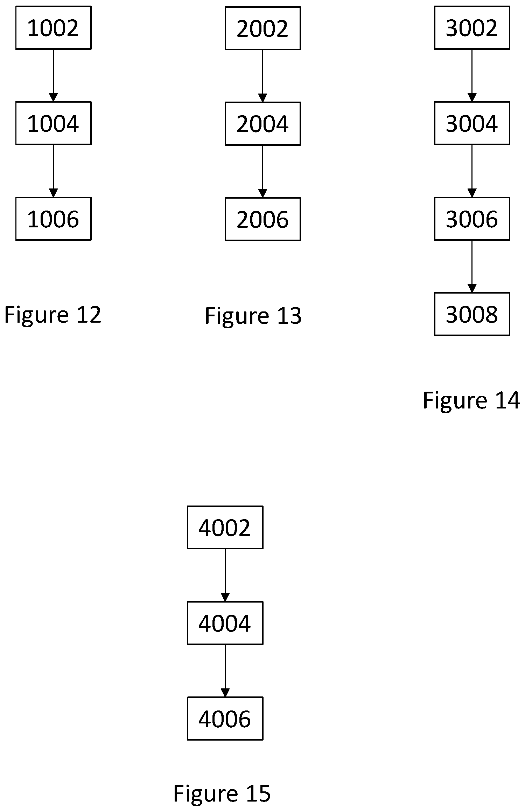

With reference to Figure 12, a computer-implemented method of classifying an object from a real-world environment in which an entity operates may be summarised as comprising: receiving 1002 an image from a camera mounted to the entity and a hyperspectral image from a hyperspectral camera mounted to the entity; obtaining 1004 a plurality of object classifications from a plurality of different classifier models, respectively; and generating 1006 an object classification by amalgamating the plurality of object classifications, wherein the plurality of different classifier models includes at least one classifier model configured to generate an object classification using the image and at least one classifier model configured to generate an object classification using the hyperspectral image.

With reference to Figure 13, a computer-implemented method of operating the autonomous system of the entity may be summarised as comprising: classifying 2002 an object in a real-world environment in which the entity operates; generating 2004 an operation plan for the autonomous system based on the object classification; and operating 2006 the autonomous system according to the operation plan. The operation plan may be a trajectory where the autonomous system is a moveable system, e.g. a driving system. Where the autonomous system is another, non-moveable, system, e.g. an automatic indication or warning system, the operation plan may instead be a plan to automatically display a warning, e.g. collision imminent, on a display device.

With reference to Figure 14, a computer-implemented method of generating a labelled map of a real-world environment in which an entity operates may be summarised as comprising: amalgamating 3002 a three-dimensional point cloud of the real-world environment constructed using images from first and second cameras mounted to the entity, and a three-dimensional point cloud of the real-world environment constructed using hyperspectral images from first and second hyperspectral cameras mounted to the entity; amalgamating 3004 a classification of an object in the real-world environment obtained using images from the first and second cameras, and a classification of the object in the real-world environment obtained using hyperspectral images from the first and second hyperspectral cameras; identifying 3006 a point in the amalgamated three-dimensional point cloud that corresponds positionally with the amalgamated classified object; and 3008 generating the labelled map by labelling the identified point with the amalgamated classification.

With reference to Figure 15, a computer-implemented method of operating the autonomous system of the entity may be summarised as comprising: constructing 4002 a labelled map; generating 4004 an operation plan for the autonomous system based on the labelled map; and controlling 4006 the autonomous system according to the operation plan.

## Claims

1. A computer-implemented method of classifying an object from a real-world environment in which an entity operates, the computer-implemented method comprising:
receiving an image from a camera mounted to the entity and a hyperspectral image from a hyperspectral camera mounted to the entity;
obtaining a plurality of object classifications from a plurality of different classifier models, respectively; and
generating an object classification by amalgamating the plurality of object classifications,
wherein the plurality of different classifier models includes at least one classifier model configured to generate an object classification using the image and at least one classifier model configured to generate an object classification using the hyperspectral image.

2. The computer-implemented method of Claim 1, wherein obtaining the plurality of object classifications from a plurality of different classifier models, comprises:
inputting the image to a convolutional neural network model to generate a classification of an object in the image.

3. The computer-implemented method of Claim 1 or Claim 2, wherein obtaining the plurality of object classifications from a plurality of different classifier models comprises:
inputting the image to a plurality of convolutional neural network models, each model trained to classify a different sub-object;
compare locations of the sub-objects to expected locations of sub-objects of one or more known objects; and
classifying the object based on the comparison.

4. The computer-implemented method of any preceding claim, wherein obtaining the plurality of object classifications from a plurality of different classifier models comprises:
inputting the image to a trained image classifier to classify an object from the image;
constructing a semantic materials map of the real-world environment by labelling each pixel of the hyperspectral image with a material based on its hyperspectral signature;
identifying the classified object in the semantic materials map; and
verifying the classified object as one of valid and invalid based on whether the material of the object in the semantic materials map matches an expected material for the classified object.

5. The computer-implemented method of any preceding claim, wherein obtaining the plurality of object classifications from a plurality of different classifier models comprises:
constructing a hyperspectral curve for each pixel of the hyperspectral image;
generating an interim image by converting the hyperspectral image to one of a single and a three-channel image based on its hyperspectral curve; and
inputting the interim image to a trained image classifier to classify an object from the real-world environment.

6. The computer-implemented method of Claim 5, wherein the trained image classifier into which the interim image is input is a convolutional neural network model.

7. The computer-implemented method of any preceding claim, wherein obtaining the plurality of object classifications from a plurality of different classifier models comprises:
obtaining a hyperspectral signature for each pixel of the hyperspectral image;
identifying a material associated with each pixel based on the hyperspectral signature;
clustering the pixels of the hyperspectral image into sub-objects based on the identified materials;
comparing the sub-objects to sub-objects of known objects; and
identifying the object based on the comparison.

8. The computer-implemented method of any preceding claim, wherein generating an object classification by amalgamating the plurality of object classifications comprises:
voting on the plurality of object classifications; and
selecting the object classification with a majority vote.

9. The computer-implemented method of Claim 8, further comprising:
applying a weight to each object classification of the plurality of object classifications prior to voting on the plurality of object classifications.

10. The computer-implemented method of Claim 9, wherein applying a weight to each object classification of the plurality of object classifications comprises:
applying a higher weight to an object classification with a higher prediction confidence than an object classification with a lower prediction confidence.

11. The computer-implemented method of Claim 9 or Claim 10, wherein applying a weight to each object classification of the plurality of object classifications comprises:
applying a higher weight to an object classification of an animal than to an object classification of a non-animal.

12. A computer-implemented method of operating an autonomous system of an entity, the computer-implemented method comprising:
classifying an object in a real-world environment in which the entity operates using the computer-implemented method of any preceding claim;
generating an operation plan for the autonomous system based on the object classification; and
operating the autonomous system according to the operation plan.

13. An entity comprising:
a body;
a hyperspectral camera mounted to the body;
a camera mounted to the body;
an autonomous system;
at least one processor; and
storage having instructions stored thereon that when executed by the at least one processor causes the at least one processor to perform the computer-implemented method of Claim 12.

14. A transitory, or non-transitory, computer-readable medium having instructions stored thereon that when executed by the at least one processor, cause the at least one processor to perform the computer-implemented method of any of Claims 1 to 12.
